# EUROPEAN PATENT APPLICATION

(11) **EP 4 760 264 A1**
(43) Date of publication of application: **17.06.2026**
(21) Application number: 24219378.7
(22) Date of filing: 12.12.2024
(51) Int. Cl.: G01N 35/04

(54) **LABORATORY SAMPLE DISTRIBUTION DEVICE AND LABORATORY AUTOMATION SYSTEM**

(71) Applicant: Roche Diagnostics GmbH, 68305 Mannheim (DE)
(72) Inventor: Addihalli Narayana, Avinash, 68305 Mannheim (DE); Huber, Tobias, 68305 Mannheim (DE); Mitzlaff, Lothar, 68305 Mannheim (DE); Wiechert, Rolf, 68305 Mannheim (DE); Ziegler, Thomas, 68305 Mannheim (DE)
(74) Representative: Patentanwälte Ruff, Wilhelm, Beier, Dauster & Partner mbB

(57) **Abstract**

The invention relates to a laboratory sample distribution device (1), comprising: a base (2) having a transport surface (3), at least one drive-controllable lane belt (4) defining a transport lane (5), the lane belt (4) being cleated for form-fit engagement with a respective sample container carrier (50) to be moved over the transport surface (3) along the transport lane (5), at least one drive-controllable cross-track belt (6) defining a transport cross-track (7), the cross-track belt (6) being cleated for form-fit engagement with a respective sample container carrier (50) to be moved over the transport surface (3) along the transport cross-track (7), the transport cross-track (7) meeting the transport lane (5) at an angle (α), an operation mode in which the lane belt (4) and the cross-track belt (6) are controlled for transferring a respective sample container carrier (50) between the transport lane (5) and the transport cross-track (7), and another operation mode in which the lane belt (4) and the cross-track belt (6) are controlled for moving a respective sample container carrier (50) along the transport lane (5) past the transport cross-track (7).

## Description

The invention relates to a laboratory sample distribution device, in particular for a laboratory automation system. Furthermore, the invention relates to a laboratory automation system.

Laboratory sample distribution devices are commonly used within laboratory automation systems for partial of complete automation of a laboratory. Such a laboratory automation system may comprise a number of laboratory stations to which samples can be distributed by the laboratory sample distribution device. Typically, such a laboratory sample distribution device is adapted to transport samples to be analyzed to the laboratory stations and away from the laboratory stations.

It is an object of the present invention to provide a laboratory sample distribution device, and to provide a laboratory automation system having such a laboratory sample distribution device which, in particular respectively, have improved properties. In particular, a versatile but robust sample distribution is to be achieved.

This object is solved by the subject-matter of the independent claims. Preferred embodiments are subject-matter of the dependent claims. By explicit reference, the wording of all claims is made content of the present description.

A laboratory sample distribution device according to the invention can be adapted to be used in a laboratory automation system. In particular, the laboratory sample distribution device is adapted to transport and/or distribute samples, in particular liquid samples, more particular blood samples, between a number of pre-analytical and/or analytical and/or post-analytical stations of the laboratory automation system.

The laboratory sample distribution device comprises a base, the base having a, in particular at least substantially planar, transport surface. Therein, the base is adapted for carrying a number of sample container carriers so that a respective sample container carrier is movable over the transport surface. In other words: The base can be adapted to support a weight of a respective sample container carrier in such a way that said sample container carrier positioned on top of the transport surface can be moved, in particular slid and/or driven, over the transport surface. Each of the sample container carriers can be adapted for holding a sample container, respectively. By moving the sample container carriers over the transport surface, sample containers held by the sample container carriers can be moved over the transport surface, accordingly.

The laboratory sample distribution device comprises at least one drive-controllable lane belt which defines a transport lane of the laboratory sample distribution device. Therein, the lane belt is cleated for form-fit engagement with a respective sample container carrier to be moved over the transport surface along the transport lane. The lane belt may have cleats regularly distributed along a circumferential extension of the lane belt, a respective one of the cleats being adapted to form-fittingly engage with a respective sample container carrier. By driving the lane belt, in particular circumferentially, the form-fit engagement may cause the respective sample container carrier to be moved over the transport surface along the transport lane.

The laboratory sample distribution device comprises at least one drive-controllable cross-track belt which defines a transport cross-track of the laboratory sample distribution device. Therein, the cross-track belt is cleated for form-fit engagement with a respective sample container carrier, said sample container carrier to be moved over the transport surface along the transport cross-track. The cross-track belt may have cleats distributed regularly along a circumferential extension of the cross-track belt, the cleats being adapted to form-fittingly engage with a respective sample container carrier as to move said sample container carrier over the transport surface along the cross-track when the cross-track belt is, in particular circumferentially, driven.

The transport cross-track of the laboratory sample distribution device and the transport lane of the laboratory sample distribution device meet at an angle. In particular, rays of the angle are both in parallel to the transport surface.

The laboratory sample distribution device has an operation mode. In this, in particular first, operation mode, the lane belt and the cross-track belt are controlled for transferring a respective sample container carrier between the transport lane and the transport cross-track. In particular, the laboratory sample distribution device is adapted to be operated in the operation mode so that - by controlling the lane belt and the cross-track belt in mutual dependency - a transfer of a respective sample container carrier between the transport lane and the transport cross-track is achieved. In other words: By operating the laboratory sample distribution device in the operation mode, a respective sample container carrier can brought from the transport lane to the transport cross-track or vice versa. Accordingly, in the operation mode, a respective sample container carrier can be diverted from the transport lane to the cross-track and/or to the transport lane from the cross track.

The laboratory sample distribution device has another operation mode. In this other, in particular second, operation mode, the lane belt and the cross-track belt are controlled for moving a respective sample container carrier along the transport lane past the transport cross-track. In particular, the laboratory sample distribution device is adapted to be operated in the other operation mode so that - by controlling the lane belt and the cross-track belt in mutual dependency - a respective sample container carrier is moved along the transport lane past the transport cross-track. Thus, in the other operation mode, a respective sample container carrier may be moved along the transport lane past the transport cross-track, in particular so that said sample container carrier passes the transport cross-track without transit from the transport lane to the cross-track. Accordingly, in the other operation mode, a respective sample container carrier can stay on the transport lane, in particular without diverting to the cross-track.

In particular, by automatically switching between its operation modes, the laboratory sample distribution device allows for sample container carriers to be selectively branched off from the transport lane and/or for sample container carriers to be selectively added to the transport lane. Therein, the laboratory sample distribution device enables particular versatile movement of sample container carriers along two different directions, namely along the transport lane and along the cross-track. The laboratory sample distribution device may allow for sample container carriers and/or sample containers to be substantially individually moved over the transport surface. Although the laboratory sample distribution device can prove to be particularly versatile and robust, it may still have a particularly small footprint.

In particular, the transport cross-track meets the transport lane at a T-junction of the transport sample distribution device. In particular, the transport cross-track and the transport lane meet orthogonally.

In particular, a timing of the lane belt and a timing of the cross-track belt are preset in mutual dependency with regard to both operation modes of the laboratory sample distribution device.

In particular, the lane belt and/or the cross-track belt may comprise a rubber material. The lane belt and/or the cross-track belt may comprise a reinforcement arrangement. The rubber material may form a matrix in which the reinforcement arrangement is embedded.

In particular, the transport lane extends longitudinally in parallel to a major transport direction of the laboratory sample distribution device. The transport cross-track may extend longitudinally in parallel to a width direction of the laboratory sample distribution device.

In particular, the base may be substantially flat and/or board shaped. In addition, or as an alternative, the transport surface of the base may extend, in particular substantially rectangularly, in parallel to both the major transport direction and the width direction.

According to an embodiment of the invention, the base is adapted to fully bear the weight of the number of sample container carriers. In particular, the base is adapted to fully bear the weight of the number of sample container carriers so that the lane belt and/or the cross-track belt do not bear the weight of any sample container carrier carried by the base. This may aid in minimizing, in particular in avoiding, a stretch of the lane belt and/or of the cross-track belt and therewith benefit an overall lifetime of the respective belt.

According to another embodiment of the invention, the base has a transport lane channel, the transport lane channel being recessed from the transport surface. Therein, a transport strand of the lane belt movably runs through the transport lane channel. The transport strand of the lane belt may be guided by the transport lane channel. In particular, the transport strand of the lane belt runs completely within the transport lane channel, in particular so that the transport strand of the lane belt, more particular the complete lane belt, is below the transport surface. The transport strand of the lane belt may run over a bottom of the transport lane channel.

According to another embodiment of the invention, the base has a cross-track channel, the cross-track channel being recessed from the transport surface. Therein, a transport strand of the cross-track belt movably runs through the cross-track channel. The transport strand of the cross-track belt may be guided by the cross-track channel. In particular, the transport strand of the cross-track belt runs completely within the cross-track channel, in particular so that the transport strand of the cross-track belt, more particular the complete cross-track belt, is below the transport surface. The transport strand of the cross-track belt may run over a bottom of the cross-track channel.

In particular, the transport strand of the lane belt may be an upper strand of the lane belt. In addition, or as an alternative, the transport strand of the cross-track belt may be an upper strand of the cross-track belt. "Upper" may refer to a position of the laboratory sample distribution device ready for operation.

In particular, the transport lane channel and the cross-track channel may be comprised by a channel grid of the base.

According to another embodiment of the invention, the base has at least one lane guiding channel extending in parallel to the transport lane. Therein, the at least one lane guiding channel is adapted to guide a respective sample container carrier, in particular non-rotatably relative to the base, along the transport lane. In particular, the base has two lane guiding channels, more particular the transport strand of the lane belt running in between both these lane guiding channels. The at least one, in particular each, lane guiding channel may be comprised by the channel grid of the base.

According to another embodiment of the invention, the base has at least one cross-track guiding channel extending in parallel to the transport cross-track. Therein, the at least one cross-track guiding channel is adapted to guide a respective sample container carrier, in particular non-rotatably relative to the base, along the transport cross-track. In particular, the base has two cross-track guiding channels, more particular the transport strand of the cross-track belt running in between both these cross-track guiding channels. The at least one, in particular each, cross-track guiding channel may be comprised by the channel grid of the base.

According to another embodiment of the invention, the laboratory sample distribution device comprises a number of sample container carriers each of which is adapted to releasably carry a respective sample container. Therein, each sample container carrier has a, in particular substantially flat, contact portion for movably contacting the transport surface. Furthermore, each sample container carrier has at least one lane belt engagement portion protruding from the contact portion and being adapted to form-fittingly engage with the lane belt. In particular, each sample container carrier has two lane belt engagement portions. In addition, each sample container carrier has at least one cross-track belt engagement portion protruding from the contact portion and being adapted to form-fittingly engage with the cross-track belt. In particular, each sample container carrier has two cross-track belt engagement portions. In particular, the at least one lane belt engagement portion is different from the at least one cross-track belt engagement portion.

In particular, the lane belt engagement portion and/or the cross-track belt engagement portion may be configured as pins.

In particular, a respective one of the sample container carriers comprises a carrier base, the carrier base having the contact portion and the lane belt engagement portion and the cross-track engagement portion. Furthermore, this sample container carrier comprises a single sample container holder which is adapted to hold a single sample container, the single sample container holder being coupled, in particular integrally or snap-fittingly, to the carrier base. Therein, the single sample container holder comprises an opening for releasably receiving a single sample container. Furthermore, the single sample container holder comprises two spring modules which are arranged coaxially with respect to the opening, the spring modules each comprising a spring element, said spring element having a number of curved spring fingers which are outwardly deflectable by a received single sample container.

According to another embodiment of the invention, the at least one, in particular each, lane guiding channel of the base is adapted to accept and/or guide the at least one, in particular each, cross-track belt engagement portion of a respective sample container carrier, in particular only when said cross-track belt engagement portion does not engage the cross-track belt. In addition, or as an alternative, the at least one, in particular each, cross-track guiding channel of the base is adapted to accept and/or guide at least one, in particular each, lane belt engagement portion of a respective sample container carrier, in particular only when said lane belt engagement portion does not engage the lane belt. Accordingly, the cross-track belt engagement portion and/or the lane belt engagement portion may serve a double purpose.

According to another embodiment of the invention, a respective, in particular upper, transport strand of the lane belt and the cross-track belt is adapted for form-fit engagement with a respective sample container carrier to be moved over the transport surface. Therein, the transport strands of both the lane belt and the cross-track belt extend substantially in parallel to the transport surface. The transport strand of the lane belt is offset by a, in particular vertical, distance relative to the transport strand of the cross-track belt. In particular, both the transport strand of the lane belt and the transport strand of the cross-track belt are set back relative to the transport surface, wherein the transport strand of the lane belt is arranged at a different depth from the transport surface than the transport strand of the cross-track belt. In other words: The upward strands of both the transport lane belt and the cross-track belt may be arranged at different levels relative to the transport surface.

According to another embodiment of the invention, the at least one, in particular each, lane belt engagement portion of a respective sample container carrier extends further from the contact portion of said sample container carrier than the at least one, in particular each, cross-track belt engagement portion of said sample container carrier. In particular, the at least one, in particular each, lane belt engagement portion of the respective sample container carrier extends further from the contact portion of said sample container carrier than the at least one, in particular each, cross-track belt engagement portion of said sample container carrier by at least, in particular exactly, the vertical distance between the transport strands of the lane belt and the cross-track belt.

According to another embodiment of the invention, the laboratory sample distribution device has a number of lane pulleys which contact the lane belt. Therein, the lane pulleys are rotatably mounted at the base opposite the transport surface. In particular, one of the lane pulleys is a lane pinion, the lane pinion being adapted to transmit driving power from a controllable lane motor of the laboratory sample distribution device to the lane belt. At least the lane pinion, in particular each lane pulley, may have teeth, in particular at its outer circumference, the lane belt having complementary teeth at its inner circumference for form-fit drive-engagement. The lane motor may be a stepper motor. A movement of the lane motor may be checked by using a fork light barrier.

According to another embodiment of the invention, the laboratory sample distribution device has a number of cross-track pulleys which contact the cross-track belt. Therein, the cross-track pulleys are rotatably mounted at the base opposite the transport surface. In particular, one of the cross-track pulleys is a cross-track pinion, the cross-track pinion being adapted to transmit driving power from a controllable cross-track motor of the laboratory sample distribution device to the cross-track belt. In particular, at least the cross-track pinion, more particular each cross-track pulley, has teeth at its outer circumference, wherein the cross-track belt has complementary teeth at its inner circumference for form-fit drive-engagement. The cross-track motor may be stepper motor. A movement of the cross-track motor may be checked by using another fork light barrier.

In particular, one of the lane pulleys may be radially adjustable to tension the lane belt, in particular in a self-resetting and/or releasably fixable manner. In addition, or as an alternative, one of the cross-track pulleys may be radially adjustable to tension the cross-track belt, in particular in a self-resetting and/or releasably fixable manner.

In particular, lane pulleys may be adapted to align the lane belt. In addition, or as an alternative, the cross-track pulleys may be adapted to align the cross-track belt.

In particular, some of the pulleys may be deflection pulleys for deflecting the respective belt and/or for aligning the respective belt.

According to another embodiment of the invention, the transport lane is defined by at least, in particular exactly, two serially arranged lane belts. In particular, the lane belts defining the transport lane are individually drive-controllable.

According to another embodiment of the invention, serially arranged lane belts of the transport lane each define a respective sub-portion of said transport lane. Therein, one of the sub-portions has an end portion which faces a neighboring sub-portion of said transport lane. The end portion defines a processing spot of the laboratory sample distribution device. In particular, when a respective sample container carrier is positioned in the processing spot, a sample container carried by this sample container carrier may be automatically gripped to then be parted from said sample container carrier. The respective sample stored within the gripped sample container can then be processed by a respective station of the laboratory automation system. In addition, or as an alternative, the sample container or another sample container can be automatically loaded to the respective sample container carrier when said sample container carrier is positioned in the processing spot. In particular, the serially arranged lane belts defining the transport lane are adapted and/or drive-controllable to build up a queue of sample container on the neighboring sub-portion in front of the processing spot. Therein, the serially arranged lane belts may be adapted and/or drive-controllable to successively pass sample container carriers from the queue to and/or through the processing spot. This may allow for a particular short idle between several samples to be processed one after another at the processing spot.

According to another embodiment of the invention, the laboratory sample distribution device comprises at least two, in particular parallel, transport lanes. Therein, the laboratory sample distribution device comprises at least one transport cross-track that is adapted to shift and/or transfer a respective sample container carrier between the transport lanes. Such a laboratory sample distribution device may prove particularly versatile regarding the distribution of sample containers.

According to another embodiment of the invention, the laboratory sample distribution device comprises at least three, in particular exactly four, transport lanes. In addition, or as an alternative, the laboratory sample distribution device comprises at least two transport cross-tracks each of which is assigned a respective pair of neighboring transport lanes and each of which is adapted to shift and/or transfer a respective sample container carrier between the neighboring transport lanes of the assigned pair. Such a laboratory sample distribution device may prove more versatile regarding the distribution of sample containers.

According to another embodiment of the invention, the transport lanes are arranged in parallel to one another so that two outer transport lanes flank at least one intermediate transport lane. In particular, there are two intermediate transport lanes. The at least one intermediate transport lane is adapted for positioning and/or pausing a respective sample container in at least one processing spot of the laboratory sample distribution device. Therein, one of the outer transport lanes is adapted for a respective sample container carrier to bypass the at least one processing spot in the major transport direction of the laboratory sample distribution device. By this, an overtaking of sample container carriers may be enabled. The other one of the outer transport lanes is adapted to feedback a respective sample container carrier against the major transport direction. In this way, a circulation of sample container carriers, in particular around the processing spots, may be enabled.

In particular, the laboratory sample distribution device may be adapted to position and/or pause a respective sample container carrier in various positions along the transport lanes. At least one, in particular some, of these positions may be a processing spot.

In particular, the laboratory sample distribution device is configured as a laboratory sample distribution module for/of a laboratory sample distribution system. In particular, the laboratory sample distribution module has, in particular complementary, couplers that are adapted and/or mechanically coded for coupling with another, in particular similar, laboratory sample distribution module of the laboratory sample distribution system. If the laboratory sample distribution system has three modules, each module having four transport lanes and seven cross-track lanes, the number of sample container carriers may be fifty-five.

In particular, the laboratory sample distribution device may have a sample container detection sensor per processing spot, each sample container detection sensor being adapted to detect whether a sample container carrier passing the sample container detection sensor currently carries a sample container.

In particular, the laboratory sample distribution device may have a number of sample container carrier detection sensors, each sample container carrier detection sensor being adapted to detect a sample container carrier passing the sample container carrier detection sensor - regardless of whether it currently carries a sample container or not.

A laboratory automation system according to the invention comprises a number of pre-analytical and/or analytical and/or post-analytical stations. Furthermore, the laboratory automation system comprises at least one laboratory sample distribution device according to the invention as described above. Therein, the laboratory sample distribution device is adapted to transport a number of sample container carriers and/or sample containers between processing spots of the laboratory sample distribution device.

Further advantages and features of the invention arise from the claims as well as from the following description of preferred embodiments of the invention, which are depicted by the drawings. Therein, equal reference signs relate to equal or similar or functionally equal components.

It is to be understood that the features mentioned above as well as the features described below are not only usable in the stated combination, respectively, but also in other combinations or solely, without leaving the frame of the present invention.
- Fig. 1: schematically depicts, in a top view, a laboratory automation system according to an embodiment of the invention and having a laboratory sample distribution device according to an embodiment of the invention,
- fig. 2: schematically depicts, in a perspective view, the laboratory sample distribution device of fig. 1,
- fig. 3: schematically depicts, in a perspective detail view, the laboratory sample distribution device of figs. 1 and 2 during operation,
- fig. 4: schematically depicts, in a plan scheme, the laboratory sample distribution device of figs. 1 to 3,

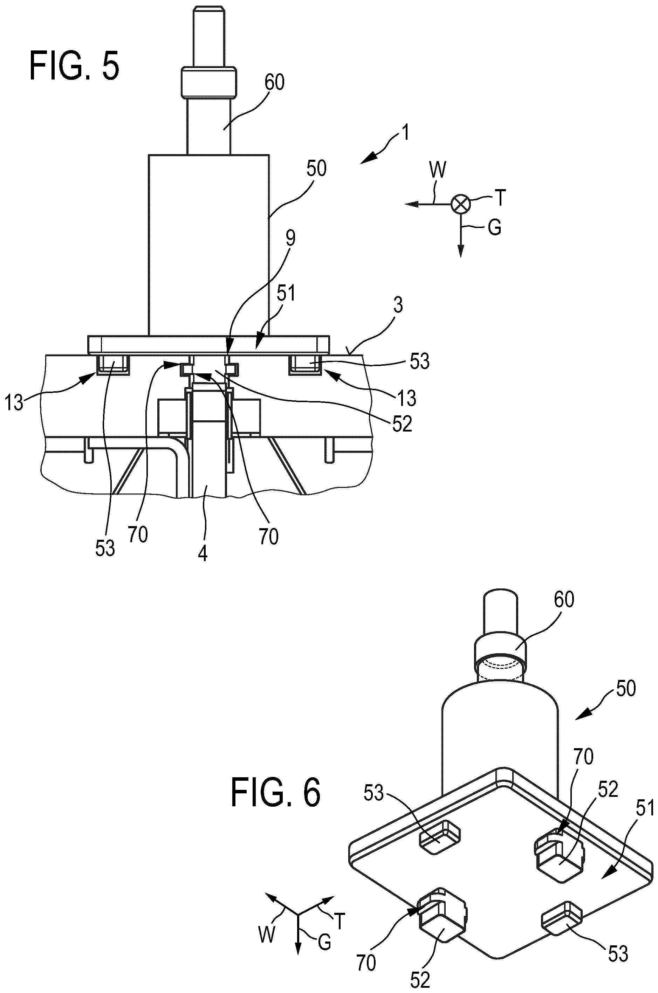

- fig. 5: schematically depicts, in a side view detail, the laboratory sample distribution device of figs. 1 to 4,
- fig. 6: schematically depicts, in a perspective view, a sample container carrier for the laboratory sample distribution device of figs. 1 to 5,

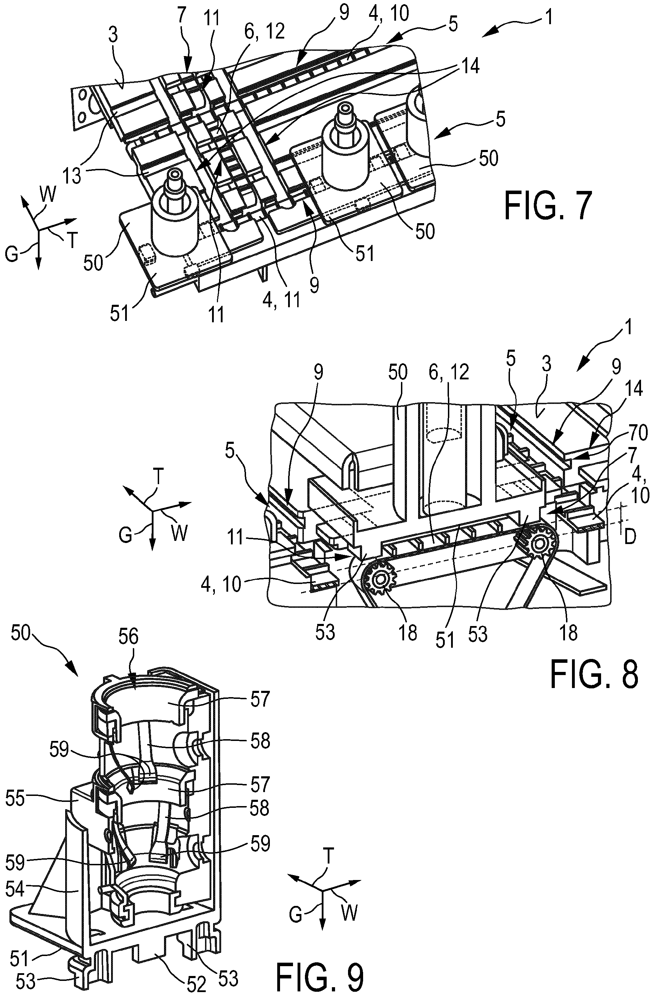

- fig. 7: schematically depicts, in a perspective detail view, the laboratory sample distribution device of figs. 1 to 5,
- fig. 8: schematically depicts, in a perspective detail view, the laboratory sample distribution device of figs. 1 to 5 and 7,
- fig. 9: schematically depicts, in a perspective cross-sectional view, another sample container carrier for the laboratory sample distribution device of figs. 1 to 5, 7 and 8,

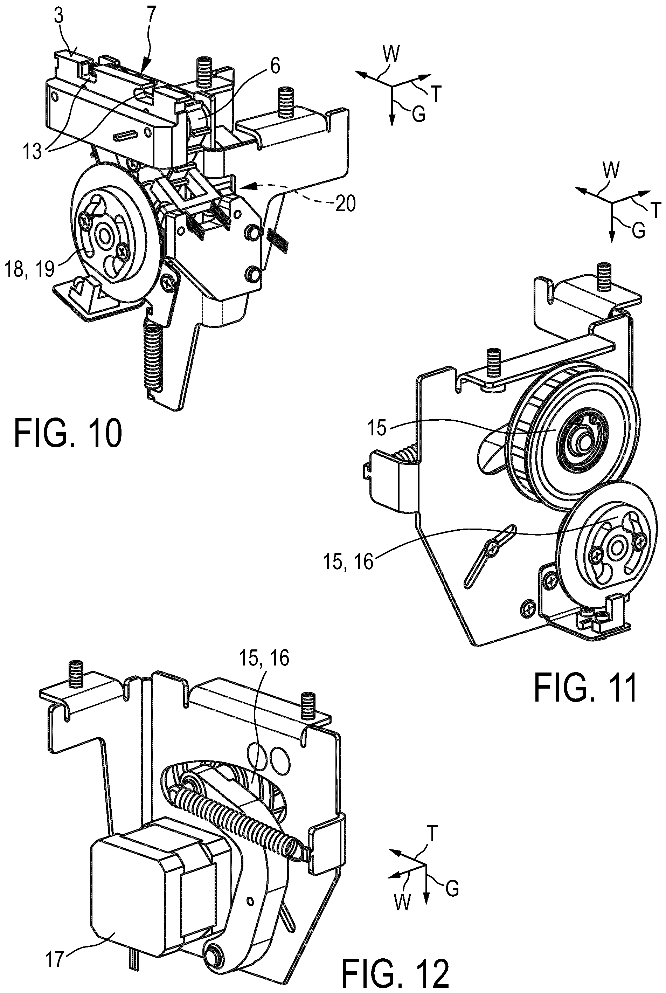

- fig. 10: schematically depicts, in a perspective view, a cross-track belt driving assembly of the laboratory sample distribution device of figs. 1 to 5 and 7 to 9,
- fig. 11: schematically depicts, in a perspective view, a lane belt driving assembly of the laboratory sample distribution device of figs. 1 to 5 and 7 to 9, and
- fig. 12: schematically depicts, in a perspective view, the lane belt driving assembly of fig. 11.

A laboratory automation system 200 comprises at least one laboratory sample distribution device 1. For instance, the laboratory automation system 200 can comprise a laboratory sample distribution system 100, the laboratory sample distribution system 100 having a number of laboratory sample distribution devices 1. The laboratory sample distribution devices 1 of the laboratory sample distribution system 100 can be configured as laboratory sample distribution modules 30. Therein, each laboratory sample distribution module 30 may have, in particular complementary, couplers 31 which are adapted and/or mechanically coded for coupling with another, in particular similar, laboratory sample distribution module 30 of the laboratory sample distribution system 100.

The laboratory automation system 200 comprises a number of pre-analytical and/or analytical and/or post-analytical stations 201. Therein, the laboratory sample distribution device 1, in particular the laboratory sample distribution system 100, is adapted to transport a number of sample container carriers 50 and/or sample containers 60 carried by sample container carriers 50 between processing spots S of the laboratory sample distribution device 1.

The, in particular modular, laboratory sample distribution device 1 has a base 2. The base 2 has a transport surface 3 which extends horizontally and faces upwards against a gravitational direction G. The base 2 is adapted to carry a number of sample container carriers 50 in such a way that the sample container carriers 50 are movable over the transport surface 3.

The laboratory sample distribution device 2 has at least one drive-controllable lane belt 4. The lane belt 4 defines a transport lane 5 of the laboratory sample distribution device 1. Therein, the lane belt 4 is cleated for a form-fit engagement with a respective sample container carrier 50 so that due to the form-fit engagement said sample container carrier 50 can be moved over the transport surface 3 along the transport lane 5 by driving the lane belt 4.

The laboratory sample distribution device 1 comprises at least one drive-controllable cross-track belt 6. Therein, the cross-track belt 6 defines a transport cross-track 7 of the laboratory sample distribution device 1. The cross-track belt 6 is cleated for form-fit engagement with a respective sample container carrier 50 in such way that due to the form-fit engagement said sample container carrier 50 can be moved over the transport surface 3 along the transport cross-track 7 by driving the cross-track belt 6.

The cross-track 7 meets the transport lane 5 at an angle a. For example, the transport cross-track 7 meets the transport lane 5 at a T-junction 8 of the laboratory sample distribution device 1. The T-junction 8 may be an orthogonal T-junction 8 so that the transport cross-track 7 and the transport lane 5 may meet at the T-junction 8 orthogonally.

The laboratory sample distribution device 1 has at least two operation modes. Therein, in a first one of these operation modes, the lane belt 4 and the cross-track belt 6 are controlled for transferring a respective sample container carrier 50 between the transport lane 5 and the transport cross-track 7. In a second one of the operation modes, which is different from the first operation mode, the lane belt 4 and the cross-track belt 6 are controlled for moving a respective sample container carrier 50 along the transport lane 5 past the transport cross-track 7.

In particular, the laboratory sample distribution device 1 comprises an electronic control unit that is adapted and/or programmed to drive the cross-track belt 6 and the lane belt 4 in accordance with the operation modes of the laboratory sample distribution device 1. By automatically switching between the operation modes, the respective sample container carrier 50 may be moved over the transport surface 3 in a predetermined manner, in particular along a predetermined path, more particular to a predetermined spot A1-A22, B1-B22, C1-C22, D1-D22 on the transport surface 3.

For instance, a timing of the lane belt 4 and a timing of the cross-track belt 6 may be preset in mutual dependency to enable both operation modes. Such a presetting may be understood in the sense of a calibration. Such a calibration may include aligning cleats of both the lane belt 4 and the cross-track belt 6 as to allow for collision-free engagement with the respective sample container carrier 50 throughout all operation modes of the laboratory sample distribution device 1.

For example, the transport lane 5 may extend longitudinally in parallel to a major transport direction T of the laboratory sample distribution device 1. The transport cross-track 7 may extend longitudinally in parallel to a width direction W of the laboratory sample distribution device 1. The base 2 may be substantially flat. The base 2 may be plate-shaped and/or tile-shaped and/or board-shaped.

The transport surface 3 of the base 2 may extend rectangularly in parallel to both the major transport direction T and the width direction W. Upon operation of the laboratory sample distribution device 1, both the width direction W and the major transport direction T may be perpendicular to the gravitational direction G. Upon operation of the laboratory sample distribution device 1, the transport surface 3 may be horizontally.

For example, the base 2 is adapted to fully bear a weight of the number of sample container carriers 50. Therein, the sample container carriers 50 may be supported by the base 2 in such a way that the lane belt 4 and/or the cross-track belt 6 are decoupled from the weight of any sample container carrier 50 carried by the base 2.

For example, the base 2 has a transport lane channel 9. The transport lane channel 9 is recessed from the transport surface 3. Therein, a transport strand 10 of the lane belt 4 is movably running through the transport lane channel 9. For instance, the transport strand 10 is completely running within the transport lane channel 9, in particular so that the transport strand 10 of the lane belt 4 is completely sunk below the transport surface 3.

For instance, the base 2 comprises a cross-track channel 11. The cross-track channel 11 is recessed from the transport surface 3. Therein, a transport strand 12 of the cross-track belt 6 is movably running through the cross-track channel 11. In particular, the transport strand 12 of the cross-track belt 6 is completely running within the cross-track channel 11. For example, the transport strand 12 of the cross-track belt 6 is completely sunk below the transport surface 3.

For example, the base 2 has at least one lane guiding channel 13. The lane guiding channel 13 extends in parallel to the transport lane 5 and is adapted to guide a respective sample container carrier 50. Therein, the lane guiding channel 13 can be adapted to non-rotatably guide the respective sample container carrier 50 relative to the base 2. The lane guiding channel 13 may guide the respective sample container carrier 50 along the transport lane 5. For example, the base 2 can have two lane guiding channels 13 per transport lane 5.

For instance, the base 2 may have at least one cross-track guiding channel 14. The cross-track guiding channel 14 extends in parallel to the transport cross-track 7 and is adapted to guide a respective sample container carrier 50 along the transport cross-track 7. The respective sample container carrier 50 can be non-rotatably guided relative to the base 2 by the cross-track guiding channel 14. The base 2 may have two cross-track guiding channels 14 per cross-track 7.

For instance, the laboratory sample distribution device 1 comprises a number of sample container carriers 50. Each of the sample container carriers 50 of the laboratory sample distribution device 1 is adapted to releasably carry a respective sample container 60. Therein, each sample container 50 may have a, in particular substantially flat, contact portion 51, the contact portion 51 being adapted for movably contacting the transport surface 3. The contact portion 51 may be adapted to slide over the transport surface 3.

For example, each sample container carrier 50 has at least one lane belt engagement portion 52 which protrudes from the contact portion 51 of the respective sample container carrier 50. Furthermore, each sample container carrier 50 may have at least one cross-track belt engagement portion 53 which protrudes from the contact portion 51 of the respective sample container carrier 50. In particular, the lane belt engagement portion 52 and the cross-track engagement portion 53 are different from one another.

A respective one of the sample container carriers 50 may comprise a carrier base 54. The carrier base 54 of the respective sample container carrier 50 may comprise the contact portion 51 as well as the lane belt engagement portion 52 and as well as the cross-track engagement portion 53. Furthermore, the respective sample container carrier 50 may comprise a single sample container holder 55 which is adapted for holding a single sample container 60. Therein, the single sample container holder 55 of the respective sample container carrier 50 may be coupled to the carrier base 54. The single sample container holder 55 may be integrally or snap-fittingly coupled to the carrier base 54.

The single sample container holder 55 of the respective sample container carrier 50 may comprise an opening 56 that is adapted for releasably receiving a sample container 60. Furthermore, the single sample container holder 55 may comprise two spring modules 57 which are arranged coaxially with respect to the opening 56. Therein, the spring modules 57 may each comprise a spring element 58, said spring element 58 having a number of curved spring fingers 59. The curved spring fingers 59 may be outwardly deflectable by a received sample container 60.

For example, the respective lane guiding channel 13 of the base 2 is adapted to accept and/or guide the respective cross-track belt engagement portion 53 of a respective sample container carrier 50. In particular, the cross-track belt engagement portion 53 of a respective sample container carrier 50 is only acceptable and/or guidable by the respective guiding channel 13 if said cross-track belt engagement portion 53 does not engage the cross-track belt 6.

For instance, the respective cross-track guiding channel 14 of the base 2 is adapted to accept and/or guide the respective lane belt engagement portion 52 of a respective sample container carrier 50. In particular, the lane belt engagement portion 52 is only acceptable and/or guidable by the cross-track guiding channel 14 if the lane belt engagement portion 52 does not engage the lane belt 4.

For example, the respective transport strands 10, 12 of the lane belt 4 and of the cross-track belt 6 both extend substantially in parallel to the transport surface 3. Therein, the transport strand 10 of the lane belt 4 may be offset by a, in particular vertical, distance D relative to the transport strand 12 of the cross-track belt 6. In other words: The transport strand 12 of the cross-track belt 6 and the transport strand 10 of the lane belt 4 may be arranged at different levels below the transport surface 3.

For example, the lane belt engagement portions 52 of a respective sample container carrier 50 extend further from the contact portion 51 of said sample container carrier 50 than the cross-track belt engagement portions 53 of said sample container carrier 50. For example, the lane belt engagement portions 52 extend further from the contact portion 51 than the cross-track belt engagement portions 53 by the same distance D, which the transport strand 10 of the lane belt 4 is vertically offset relative to the transport strand 12 of the cross-track belt 6.

The transport lane channel 9 and the lane belt engagement portion 52 may have complementary cross-sectional contours 70, in particular in a view in the transport direction T. The complementary cross-sectional contours 70 may have a cross-shape and/or a T-shape.

The complementary cross-sectional contours 70 may be adapted for form-fit engagement against, in particular and in, the direction of gravity G. In particular, the respective sample container carrier 50 thus cannot be removed from the base 2 if the lane belt engagement portion 52 of said sample container carrier 50 engages the lane belt 4 and/or if said lane belt engagement portion 52 is being guided in the transport lane channel 9. In particular, if the sample container carrier 50 is moved by the cross-track belt 6, it may be possible by principle to lift up and/or remove said sample container 50 from the base 2 against the direction of gravity G.

For example, the laboratory sample distribution device 1 comprises a number of lane pulleys 15. The lane pulleys 15 contact the lane belt 4. Therein, the lane pulleys 15 are rotatably mounted at the base 2 opposite the transport surface 3. One of the lane pulleys 15 may be a lane pinion 16 which is adapted to transmit driving power from a controllable lane motor 17 of the laboratory sample distribution device 1 to the lane belt 4. The lane motor 17 may be controllable by the electronic control unit of the laboratory sample distribution device 1. The lane motor 17 may be a stepper motor.

In addition, or as an alternative, the laboratory sample distribution device 1 may have a number of cross-track pulleys 18. The cross-track pulleys 18 may be adapted to contact the cross-track belt 6. Therein, the cross-track pulleys 18 may be rotatably mounted at the base 2 opposite the transport surface 3. For instance, one of the cross-track pulleys 18 may be a cross-track pinion 19 which is adapted to transmit driving power from a controllable cross-track motor 20 of the laboratory sample distribution device 1 to the cross-track belt 6. The cross-track motor 20 may be controllable by the electronic control unit of the laboratory sample distribution device 1. The cross-track motor 20 may be a stepper motor.

One of the lane pulleys may be radially adjustable to tension the lane belt 4. In particular, the lane belt 4 can be tensioned by radially adjusting at least one of the lane pulleys 15 in a self-resetting and/or releasably fixable manner.

In addition, or as an alternative, one of the cross-track pulleys 18 may be radially adjustable to tension the cross-track belt 6. In particular, the cross-track belt 6 can be tensioned by radially adjusting at least one of the cross-track pulleys 18 in a self-resetting and/or releasably fixable manner.

"Radially" can refer to a rotational axis of the respective adjustable pulley 15, 18.

For example, the transport lane 5 is defined by at least two serially arranged lane belts 4. The serially arranged lane belts 4, which together define the transport lane 5, may be individually drive-controllable, in particular by a separate lane motor 17 per each of the serially arranged lane belts 4.

The serially arranged lane belts 4 of the transport lane 5 for example define a sub-portion 21 of said transport lane 5, respectively. Therein, one of the sub-portions 21 has an end portion 22 which faces a neighboring sub-portion 21 of said transport lane 5. Therein, the end portion 22 defines a processing spot S of the laboratory sample distribution device 1. The serially arranged lane belts 4 which define the transport lane 5 may be adapted and/or drive-controllable as to build up a queue Q of sample container carriers 50 and/or sample containers 60 on the neighboring sub-portion 21 in front of the processing spot S. Furthermore, the lane belts 4 defining the transport lane 5 may be adapted and/or drive-controllable to successively pass sample container carriers 50 and/or sample containers 60 from the queue Q to and/or through the processing spot S.

For example, the laboratory sample distribution device 1 comprises at least two transport lanes 5. In particular, the at least two, more particular all, transport lanes 5 of the laboratory sample distribution device 1 may be arranged and/or extended in particular in parallel to one another. The laboratory sample distribution device 1 may comprise at least one transport cross-track 7 which is adapted to shift and/or transfer a respective sample container carrier 50 between the transport lanes 5 of the sample distribution device 1.

For example, the laboratory sample distribution device 1 may comprise at least three, in particular exactly four, transport lanes 5. In addition, or as an alternative, the laboratory sample distribution device 1 comprises at least two transport cross-tracks 7 each of which is assigned a respective pair of neighboring transport lanes 5. Therein, each of the at least two transport cross-tracks 7 may be adapted to shift and/or transfer a respective sample container carrier 50 between the neighboring transport lanes 5 of the assigned pair.

The laboratory sample distribution device 1 may have at least one intermediate transport lane 5, 5B, 5C, for instance two intermediate transport lanes 5, 5B, 5C. Therein, the laboratory sample distribution device 1 may have two outer transport lanes 5, 5A, 5D which presently flank the pair intermediate transport lanes 5, 5B, 5C. The outer transport lanes 5, 5A, 5D and the intermediate transport lanes 5, 5B, 5C may be arranged in parallel to one another. Therein, the intermediate transport lanes may be adapted for positioning and/or pausing a respective sample container carrier 50 in at least one processing spot S of the laboratory sample distribution device 1. Thus, the at least one processing spot S may be arranged at and/or on at least one of the intermediate transport lanes 5, 5B, 5C.

For example, one of the outer transport lanes 5, 5A is adapted for a respective sample container carrier 50 to bypass the at least one processing spot S in the major transport direction T of the laboratory sample distribution device 1. The other one of the outer transport lanes 5, 5D is therein adapted to feedback a respective sample container carrier 50 against the major transport direction T. In particular, this other one of the outer transport lanes 5, 5D is free of processing spots S.

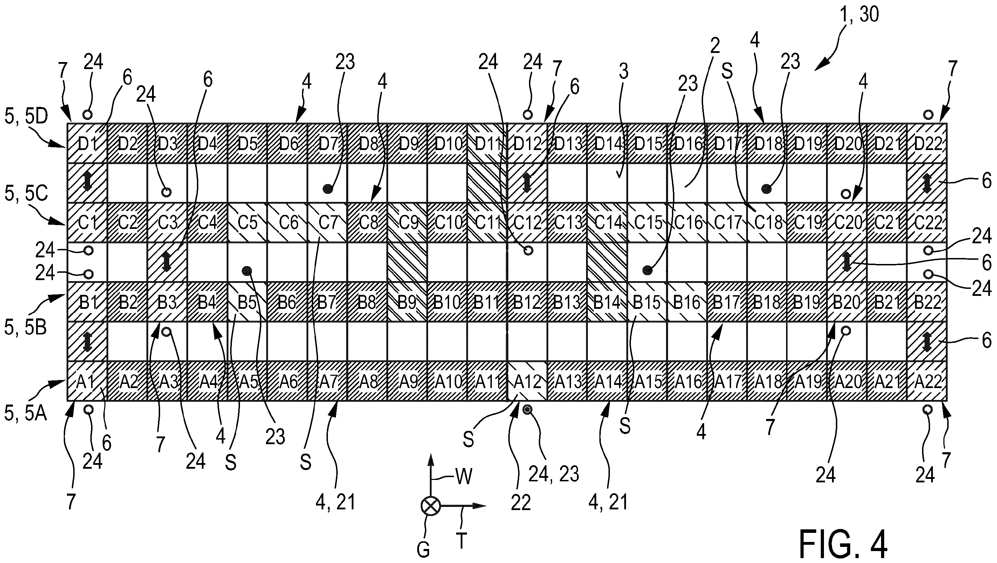

As best to be seen from fig. 4, the laboratory sample distribution device 1 may be adapted to position and/or pause a respective sample container carrier 50 in various positions A1-A22, B1-B22, C1-C22, D1-D22 along the transport lanes 5, 5A, 5B, 5C, 5D. At least one, in particular some, of these positions A1-A22, B1-B22, C1-C22, D1-D22 may be a processing spot S of the laboratory sample distribution device 1.

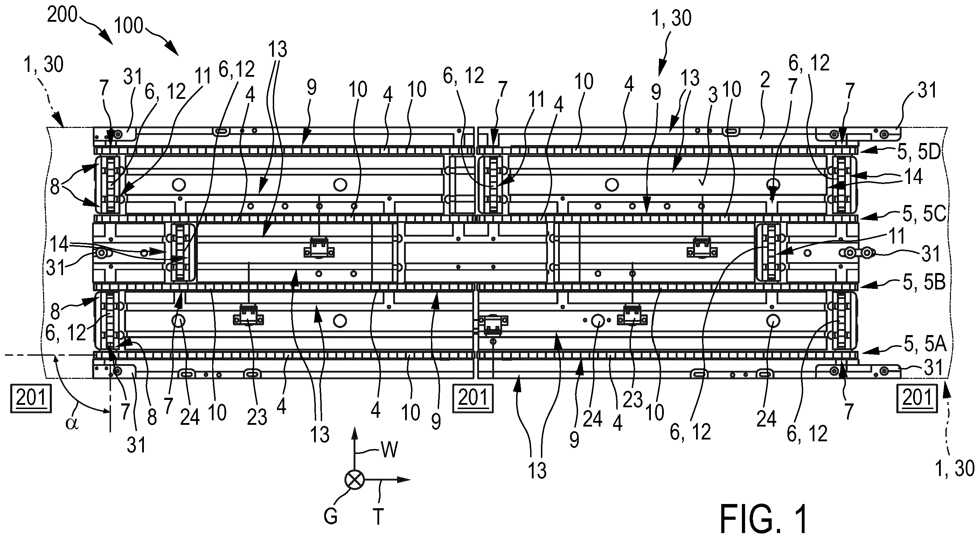

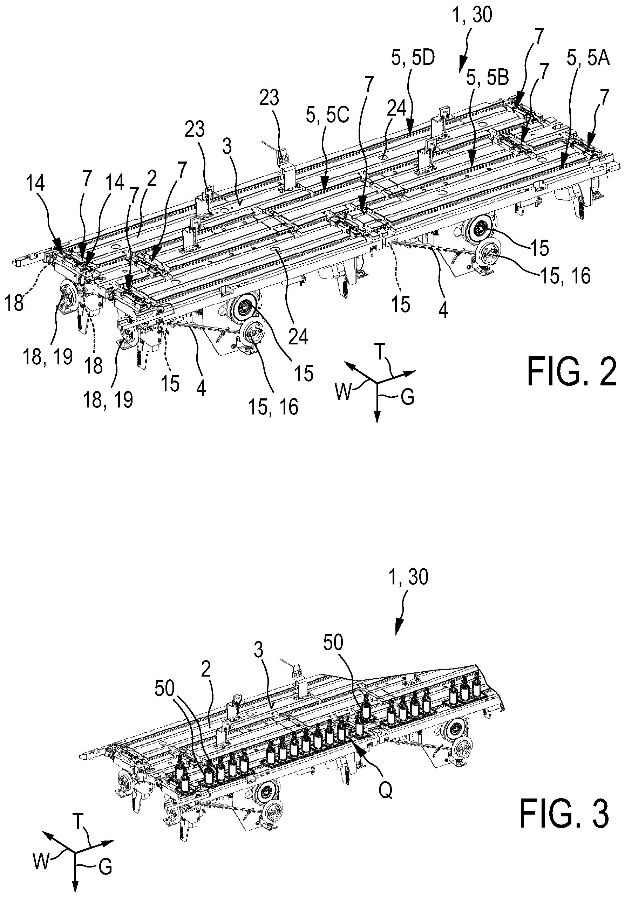

If the laboratory sample distribution system 100 has, for instance in accordance with figs. 1 to 4, exactly three modules 30, wherein each module 30 has four transport lanes 5 and seven cross-track lanes 7, the number of sample container carriers 50 may be exactly fifty-five.

The laboratory sample distribution device 1 may have a sample container detection sensor 23 per processing spot S, each sample container detection sensor 23 being adapted to detect whether a sample container carrier 50 passing the sample container detection sensor 23 carries a sample container 60. In addition, or as an alternative, the laboratory sample distribution device 1 may have a number of sample container carrier detection sensors 24, wherein each sample container carrier detection sensor 24 is adapted to detect a sample container carrier 50 passing the sample container carrier detection 24 - regardless of whether it carries a sample container 60 or not.

## Claims

1. Laboratory sample distribution device (1), comprising:
- a base (2) having a transport surface (3), the base (2) being adapted for carrying a number of sample container carriers (50) so that the number of sample container carriers (50) is movable over the transport surface (3),
- at least one drive-controllable lane belt (4) defining a transport lane (5) of the laboratory sample distribution device (1), the lane belt (4) being cleated for form-fit engagement with a respective sample container carrier (50) to be moved over the transport surface (3) along the transport lane (5),
- at least one drive-controllable cross-track belt (6) defining a transport cross-track (7) of the laboratory sample distribution device (1), the cross-track belt (6) being cleated for form-fit engagement with a respective sample container carrier (50) to be moved over the transport surface (3) along the transport cross-track (7), the transport cross-track (7) meeting the transport lane (5) at an angle (α),
- an operation mode in which the lane belt (4) and the cross-track belt (6) are controlled for transferring a respective sample container carrier (50) between the transport lane (5) and the transport cross-track (7), and
- another operation mode in which the lane belt (4) and the cross-track belt (6) are controlled for moving a respective sample container carrier (50) along the transport lane (5) past the transport cross-track (7).

2. Laboratory sample distribution device (1) according to claim 1 **characterized in that**
- the base (2) is adapted to fully bear a weight of the number of sample container carriers (50), in particular so that the lane belt (4) and/or the cross-track belt (6) do not bear weight of any sample container carrier (50) carried by the base (2).

3. Laboratory sample distribution device (1) according to claim 1 or 2, **characterized in that**
- the base (2) has a transport lane channel (9) recessed from the transport surface (3), a transport strand (10) of the lane belt (4) movably running, in particular completely within and, through the transport lane channel (9), and/or
- the base (2) having a cross-track channel (11) recessed from the transport surface (3), a transport strand (12) of the cross-track belt (6) movably running, in particular completely within and, through the cross-track channel (11).

4. Laboratory sample distribution device (1) according to any of claims 1 to 3, **characterized in that**
- the base (2) has at least one lane guiding channel (13), in particular two lane guiding channels (13), extending in parallel to the transport lane (5) and adapted to guide a respective sample container carrier (50), in particular non-rotatably relative to the base (2), along the transport lane (5); and/or
- the base (2) having at least one cross-track guiding channel (14), in particular two cross-track guiding channels (14), extending in parallel to the transport cross-track (7) and adapted to guide a respective sample container carrier (50), in particular non-rotatably relative to the base (2), along the transport cross-track (7).

5. Laboratory sample distribution device (1) according to any of the preceding claims, **characterized in that**,
- the laboratory sample distribution device (1) comprises the number of sample container carriers (50) each of which being adapted to releasably carry a respective sample container (60),
- each sample container carrier (50) having a, in particular substantially flat, contact portion (51) for movably contacting the transport surface (3),
- each sample container carrier (50) having at least one lane belt engagement portion (52), in particular two lane belt engagement portions (52), protruding from the contact portion (51) and being adapted to form-fittingly engage with the lane belt (4),
- each sample container carrier (50) having at least one cross-track belt engagement portion (53), in particular two cross-track belt engagement portions (53), protruding from the contact portion (51) and being adapted to form-fittingly engage with the cross-track belt (6).

6. Laboratory sample distribution device (1) according to any of the preceding claims, **characterized in that**
- a lane guiding channel (13) of the base (2) is adapted to accept and/or guide a cross-track belt engagement portion (53) of a respective sample container carrier (50), in particular only when said cross-track belt engagement portion (53) does not engage the cross-track belt (6), and/or
- a cross-track guiding channel (14) of the base (2) being adapted to accept and/or guide a lane belt engagement portion (52) of a respective sample container carrier (50), in particular only when said lane belt engagement portion (52) does not engage the lane belt (4).

7. Laboratory sample distribution device (1) according to any of the preceding claims, **characterized in that**,
- the lane belt (4) and the cross-track belt (6) each have a respective, in particular upper, transport strand (10, 12) for form-fit engagement with a respective sample container carrier (50) to be moved over the transport surface (3),
- the transport strands (10, 12) of both the lane belt (4) and the cross-track belt (6) extending substantially in parallel to the transport surface (3),
- the transport strand (10) of the lane belt (4) being offset by a, in particular vertical, distance (D) relative to the transport strand (12) of the cross-track belt (6).

8. Laboratory sample distribution device (1) according to claim 7, **characterized in that**
- a, in particular each, lane belt engagement portion (52) of a respective sample container carrier (50) extends further from a contact portion (51) of said sample container carrier (50) than a, in particular each, cross-track belt engagement portion (53) of said sample container carrier (50), in particular at least by the distance (D) the transport strand (10) of the lane belt (4) is vertically offset relative to the transport strand (12) of the cross-track belt (6).

9. Laboratory sample distribution device (1) according to one of the preceding claims, **characterized in that**
- the laboratory sample distribution device (1) has a number of lane pulleys (15) contacting the lane belt (4), the lane pulleys (15) being rotatably mounted at the base (2) opposite the transport surface (3), in particular one of the lane pulleys (15) being a lane pinion (16) that is adapted to transmit driving power from a controllable lane motor (17) of the laboratory sample distribution device (1) to the lane belt (4); and/or **in that**
- the laboratory sample distribution device (1) has a number of cross-track pulleys (18) contacting the cross-track belt (6), the cross-track pulleys (18) being rotatably mounted at the base (2) opposite the transport surface (3), in particular one of the cross-track pulleys (18) being a cross-track pinion (19) that is adapted to transmit driving power from a controllable cross-track motor (20) of the laboratory sample distribution device (1) to the cross-track belt (6).

10. Laboratory sample distribution device (1) according to any of the preceding claims, **characterized in that**
- the transport lane (5) is defined by at least two serially arranged lane belts (4), in particular the lane belts (4) defining the transport lane (5) being individually drive-controllable.

11. Laboratory sample distribution device (1) according to any of the preceding claims, **characterized in that**
- the serially arranged lane belts (4) of the transport lane (5) each define a respective sub-portion (21) of said transport lane (5),
- one of the sub-portions (21) having an end portion (22) facing a neighboring sub-portion (21) of said transport lane (5),
- the end portion (22) defining a processing spot (S) of the laboratory sample distribution device (1),
- in particular the lane belts (4) defining said transport lane (5) being adapted and/or drive-controllable to build up a queue (Q) of sample container carriers (50) on the neighboring sub-portion (21) in front of the processing spot (S) and to successively pass sample container carriers (50) from the queue (Q) to and/or through the processing spot (S).

12. Laboratory sample distribution device (1) according to any of the preceding claims, **characterized in that**
- the laboratory sample distribution device (1) comprises at least two, in particular parallel, transport lanes (5),
- the laboratory sample distribution device (1) comprising at least one transport cross-track (7) that is adapted to shift and/or transfer a respective sample container carrier (50) between the transport lanes (5).

13. Laboratory sample distribution device (1) according to any of the preceding claims, **characterized in that**
- the laboratory sample distribution device (1) comprises at least three, in particular four, transport lanes (5); and/or **in that**
- the laboratory sample distribution device (1) comprises at least two transport cross-tracks (7) each of which is assigned a respective pair of neighboring transport lanes (5) and each of which is adapted to shift and/or transfer a respective sample container carrier (50) between the neighboring transport lanes (5) of the assigned pair.

14. Laboratory sample distribution device (1) according to claim 13, **characterized in that**
- the transport lanes (5) are arranged in parallel to one another so that two outer transport lanes (5, 5A, 5D) flank at least one intermediate transport lane (5, 5B, 5C),
- the at least one intermediate transport lane (5, 5B, 5C) being adapted for positioning and/or pausing a respective sample container carrier (50) in at least one processing spot (S) of the laboratory sample distribution device (1),
- one of the outer transport lanes (5, 5A) being adapted for a respective sample container carrier (50) to bypass the at least one processing spot (S) in a major transport direction (T) of the laboratory sample distribution device (1), and
- the other one of the outer transport lanes (5, 5D) being adapted to feedback a respective sample container carrier (50) against the major transport direction (T).

15. Laboratory automation system (200), comprising:
- a number of pre-analytical and/or analytical and/or post-analytical stations (201), and
- a laboratory sample distribution device (1) according to any of the preceding claims, the laboratory sample distribution device (1) being adapted to transport a number of sample container carriers (50) and/or sample containers (60) between processing spots (S) of the laboratory sample distribution device (1).
